# EUROPEAN PATENT SPECIFICATION

(11) **EP 4 037 278 B1**
(45) Date of publication and mention of the grant of the patent: **10.09.2025**
(21) Application number: 20868932.3
(22) Date of filing: 24.09.2020
(51) Int. Cl.: H04L 12/46, H04L 9/40

(54) **A NODE AND A SYSTEM FOR CONTROLLING NETWORK ACCESS OF NODE ON BASIS OF TUNNEL AND DATA FLOW**
KNOTEN UND SYSTEM ZUR STEUERUNG DES NETZZUGRIFFS EINES KNOTENS AUF BASIS VON TUNNEL UND DATENFLUSS
NOEUD ET SYSTÈME DE COMMANDE D'ACCÈS AU RÉSEAU D'UN NOEUD SUR LA BASE D'UN TUNNEL ET D'UN FLUX DE DONNÉES

(30) Priority: 24.09.2019 US 201916580866; 24.09.2019 US 201916580974; 21.08.2020 KR 20200105345
(43) Date of publication of application: 03.08.2022
(73) Proprietor: PRIBIT Technology, Inc., Seoul 08510 (KR)
(72) Inventor: KIM, Young Rang, Seoul 08510 (KR)
(74) Representative: RCD-Patent Giesen, Schmelcher & Griebel Patentwanwälte PartG mbB
(86) International application number: PCT/KR2020/012928
(87) International publication number: WO 2021/060858

(56) References cited:
- WO-A1-2017/016473
- KR-A- 20020 088 728
- KR-A- 20070 102 698
- KR-A- 20160 123 069
- KR-A- 20180 006 413
- KR-B1- 101 173 583
- US-B1- 9 148 408

## Description

### [Technical Field]

Embodiments disclosed in this specification relate to a technology for controlling network access based on a tunnel and a data flow in a network environment.

### [Background Art]

A plurality of devices may access data over a network. For example, a smartphone may transmit or receive data with a server on the Internet. The network may include a private network such as the intranet as well as a public network such as the Internet.

### [Disclosure]

### [Technical Problem]

A technology for restricting access to the network based on transmission control protocol (TCP)/Internet protocol (IP) is being applied to control indiscriminate access to a network.

For example, a network access controller (NAC) allows an authorized terminal to access a network by receiving the authorized IP address and blocks an unauthorized terminal by using address resolution protocol spoofing (ARP spoofing) when the unauthorized terminal uses an unauthorized IP address. A firewall refers to a method of determining whether to allow transmission of a data packet, based on source IP, destination IP, and port information, which are included in IP header information, and a policy. A virtual private network (VPN) refers to a method that guarantees the integrity and confidentiality of data packets by using a tunnel, to which encryption is applied, on the TCP/IP protocol.

However, the ARP spoofing may be a load on a network. Recently, a technology for bypassing the ARP spoofing has been developed. The firewall may be used to control the flow of data packets, and thus may not be directly involved in a process of generating a connection between two nodes. Furthermore, the VPN is vulnerable to managing the flow of data packets after a tunnel is generated. Besides, the technologies are based on TCP/IP, and thus may be vulnerable to security on another layer (e.g., an application layer) among open system interconnection (OSI) layers.

US Patent US 9,148,408 B1 proposes a system in which a client is authenticated and thereafter may transmit data via an authorized tunnel. International Patent Application WO 2017 / 016 473 A1 discloses a method for detecting an authorized tunnel.

Various embodiments disclosed in the specification provide a node and a system for solving the above-described problems in a network environment.

### [Technical Solution]

According to an embodiment of the invention, a node may include a communication circuit, a processor operatively connected to the communication circuit, and a memory operatively connected to the processor and storing a target application and an access control application. The memory may store instructions that cause, when executed by the processor, the node to perform the steps according to claim 1.

According to an embodiment disclosed of the invention, a system according to claim 10 is defined.

### [ Advantageous Effects]

According to the embodiments disclosed in the specification, a terminal may block data packet transmission of an unauthorized application.

Furthermore, according to the embodiments disclosed in the specification, it is possible to solve the problem of setting and retrieving a policy and to prevent bypass attacks as compared to a wide range of IP address-based network security technologies such as NAC.

Moreover, according to the embodiments disclosed in the specification, it is possible to block a man-in-the-middle (MITM) attack in a zero trust network environment, and thus tunnel-based access control may be performed as compared to VPN that provides only section protection.

Also, according to the embodiments disclosed in the specification, it is possible to solve an issue inherent in TCP/IP-based network security technology and to provide a safe network connection.

In addition, according to the embodiments disclosed in the specification, it is possible to solve an issue that there is a need to set a policy depending on network control equipment.

Besides, a variety of effects directly or indirectly understood through the specification may be provided.

### [ Description of Drawings]

FIG. 1 illustrates an environment including a plurality of networks.
FIG. 2 illustrates architecture in a network environment, according to various embodiments.
FIG. 3 is a functional block diagram illustrating a database stored in a controller, according to various embodiments.
FIG. 4 is a functional block diagram of a terminal, according to various embodiments.
FIG. 5 illustrates an operation of controlling transmission of a data packet, according to various embodiments.
FIG. 6 shows a signal flow diagram for accessing a controller, according to various embodiments.
FIG. 7 shows a user interface screen for accessing a controller, according to various embodiments.
FIG. 8 illustrates a signal flow diagram for user authentication, according to various embodiments.
FIG. 9 illustrates a flowchart of a signal for updating a control flow, according to various embodiments.
FIG. 10 illustrates a flowchart of a signal for controlling network access, according to various embodiments.
FIG. 11A illustrates a user interface screen when network access is blocked, according to various embodiments.
FIG. 11B illustrates a user interface screen when network access is permitted, according to various embodiments.
FIG. 12 is a flowchart illustrating an operation for controlling network access in a terminal, according to various embodiments.
FIG. 13 illustrates a flowchart of another operation for controlling network access in a terminal, according to various embodiments.
FIG. 14 illustrates a flowchart of an operation for controlling network access in a gateway, according to various embodiments.
FIG. 15 illustrates a signal flow diagram for releasing network access, according to various embodiments.
FIG. 16 illustrates a user interface screen for releasing network access, according to various embodiments.
With regard to description of drawings, the same or similar components will be marked by the same or similar reference signs.

### [ Mode for Invention]

Hereinafter, various embodiments of the present disclosure will be described with reference to accompanying drawings. However, those of ordinary skill in the art will recognize that modification, equivalent, and/or alternative on various embodiments described herein may be variously made.

In this specification, the singular form of the noun corresponding to an item may include one or more of items, unless interpreted otherwise in context. In the present disclosure, the expressions "A or B", "at least one of A and B", "at least one of A or B", "A, B, or C", "at least one of A, B, and C", and "at least one of A, B, or C" may include any and all combinations of one or more of the associated listed items. The terms, such as "first" or "second" may be used to simply distinguish the corresponding component from the other component, but do not limit the corresponding components in other aspects (e.g., importance or order). When a component (e.g., a first component) is referred to as being "coupled with/to" or "connected to" another component (e.g., a second component) with or without the term of "operatively" or "communicatively", it may mean that a component is connectable to the other component, directly (e.g., by wire), wirelessly, or through the third component.

Each component (e.g., a module or a program) of components described in this specification may include a single entity or a plurality of entities. According to various embodiments, one or more components of the corresponding components or operations may be omitted, or one or more other components or operations may be added. Alternatively or additionally, a plurality of components (e.g., a module or a program) may be integrated into one component. In this case, the integrated component may perform one or more functions of each component of the plurality of components in the manner same as or similar to being performed by the corresponding component of the plurality of components prior to the integration. According to various embodiments, operations executed by modules, programs, or other components may be executed by a successive method, a parallel method, a repeated method, or a heuristic method. Alternatively, at least one or more of the operations may be executed in another order or may be omitted, or one or more operations may be added.

The term "module" used herein may include a unit, which is implemented with hardware, software, or firmware, and may be interchangeably used with the terms "logic", "logical block", "part", or "circuit". The "module" may be a minimum unit of an integrated part or may be a minimum unit of the part for performing one or more functions or a part thereof. For example, according to an embodiment, the module may be implemented in the form of an application-specific integrated circuit (ASIC).

Various embodiments of the present disclosure may be implemented with software (e.g., a program or an application) including one or more instructions stored in a storage medium (e.g., a memory) readable by a machine. For example, the processor of a machine may call at least one instruction of the stored one or more instructions from a storage medium and then may execute the at least one instruction. This enables the machine to operate to perform at least one function depending on the called at least one instruction. The one or more instructions may include a code generated by a complier or a code executable by an interpreter. The machine-readable storage medium may be provided in the form of a non-transitory storage medium. Herein, 'non-transitory' just means that the storage medium is a tangible device and does not include a signal (e.g., electromagnetic waves), and this term does not distinguish between the case where data is semipermanently stored in the storage medium and the case where the data is stored temporarily.

A method according to various embodiments disclosed in the specification may be provided to be included in a computer program product. The computer program product may be traded between a seller and a buyer as a product. The computer program product may be distributed in the form of a machine-readable storage medium (e.g., compact disc read only memory (CD-ROM)) or may be distributed (e.g., downloaded or uploaded), through an application store (e.g., PlayStore^{™}), directly between two user devices (e.g., smartphones), or online. In the case of on-line distribution, at least part of the computer program product may be at least temporarily stored in the machine-readable storage medium such as the memory of a manufacturer's server, an application store's server, or a relay server or may be generated temporarily.

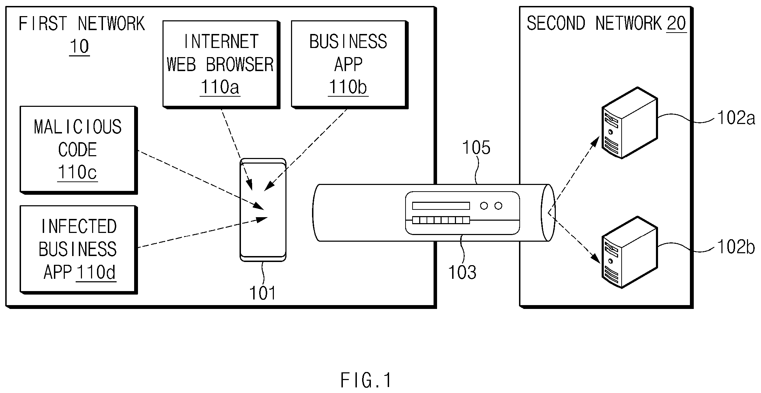

FIG. 1 illustrates an environment including a plurality of networks.

Referring to FIG. 1, a first network 10 and a second network 20 may be different networks from each other. For example, the first network 10 may be a public network such as Internet, and the second network 20 may be a private network such as an intranet or VPN.

The first network 10 may include a terminal 101. In various embodiments described with reference to FIGS. 1 to 16, 'terminal(s)' may be various types of devices capable of performing data communication. For example, the terminal 101 may include a portable device such as a smartphone or tablet, a computer device such as a desktop or laptop, a multimedia device, a medical device, a camera, a wearable device, a virtual reality (VR) device, or a home appliance device, but is not limited to the devices described above. For example, the terminal 101 may include a server or gateway that is capable of transmitting data packets through an application. The terminal 101 may also be referred to as an 'electronic device' or a 'node'.

The terminal 101 may attempt to access the second network 20 and may transmit data to servers 102a and 102b included in the second network 20. The terminal 101 may transmit data to the servers 102a and 102b through a gateway 103 and a tunnel 105. FIG. 1 illustrates an example in which the second network 20 includes only a server. However, according to various embodiments, the second network 20 may further include an electronic device such as the terminal 101 or a terminal.

When it is approved that the terminal 101 accesses the first network 10, the terminal 101 may communicate with all servers included in the first network 10, and thus the terminal 101 may be exposed from attacks by malicious programs. For example, in addition to trusted and/or secure applications such as an Internet web browser 110a and a business application 110b, the terminal 101 may receive data of untrusted or unsecured applications such as a malicious code 110c and an infected business application 110d.

The terminal 101 infected by a malicious program may attempt to access the second network 20 and/or to transmit data. When the second network 20 is formed based on IP, such as VPN, it may be difficult for the second network 20 to individually monitor a plurality of devices included in the second network 20. The second network 20 may be vulnerable to security for an application layer or a transport layer in an OSI layer. Also, when the terminal 101 includes a malicious application after a tunnel has already been generated, the data of the malicious application may be delivered to another electronic device in the second network 20.

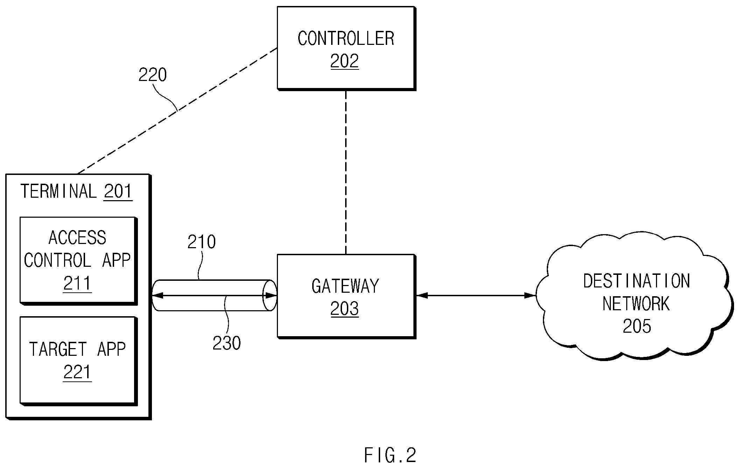

FIG. 2 illustrates architecture in a network environment, according to various embodiments.

Referring to FIG. 2, the number of a terminal 201, a gateway 203, and a destination network 205 is not limited to the number shown in FIG. 2. For example, the terminal 201 may transmit data to a plurality of destination networks through a plurality of gateways, and a controller 202 may manage a plurality of terminals and a gateway. The terminal 201 may perform a function identical or similar to that of the terminal 101 shown in FIG. 1; the gateway 203 may perform a function identical or similar to that of the gateway 103 shown in FIG. 1; and, the destination network 205 may have a structure identical or similar to that of the first network 10 or the second network 20 of FIG. 1.

For example, the controller 202 may be a server (or a cloud server). The controller 202 may guarantee reliable data transmission in a network environment by managing data transmission between the terminal 201, the gateway 203, and another network (e.g., the destination network 205). For example, the controller 202 may manage access of the terminal 201 to the destination network 205 through policy information or blacklist information, may relay the generation of an authorized tunnel 210 between the terminal 201 and the gateway 203, or may remove the tunnel 210 depending on the security event collected from the terminal 201 or the gateway 203. The terminal 201 may communicate with the destination network 205 only through the tunnel 210 authorized by the controller 202. When the authorized tunnel 210 is not present, the terminal 201 may be blocked from accessing the destination network 205. According to an embodiment, the controller 202 may transmit or receive control data packets to or from the terminal 201 to perform various operations (e.g., registration, approval, authentication, update, and termination) associated with network access of the terminal 201. A flow (e.g., 220) through which a control data packet is transmitted may be referred to as a control flow.

The gateway 203 may be positioned on the boundary of the network, to which the terminal 201 belongs, or on the boundary of the destination network 205. The plurality of gateways 203 may be present. The gateway 203 may forward only a data packet, which is received through the authorized tunnel 210, from among data packets received from the terminal 201 to the destination network 205. A flow (e.g., 230) through which a data packet is transmitted between the terminal 201 and the gateway 203, between the gateway 203 and the destination network 205, or between the terminal 201 and the gateway 203 may be referred to as a "data flow". As compared to the tunnel 210 generated in units of terminals or IPs, the data flow may be generated in more detailed units (e.g., applications). According to an embodiment, the gateway 203 may be connected to the controller 202 based on a cloud. The gateway 203 may generate the tunnel 210, which is authorized to the terminal 201, under the control of the controller 202.

According to various embodiments, the terminal 201 may include an access control application 211, which manages network access of an application stored in the terminal 201, and a network driver (not shown). For example, when an event that a target application 221 (e.g., an application (one of 110a to 110d) of FIG. 1) included in the terminal 201 accesses the destination network 205 occurs, the access control application 211 may determine whether access of the target application 221 is possible. When the access of the target application 221 is possible, the access control application 211 may transmit a data packet to the gateway 203 through the tunnel 210. The access control application 211 may control the transmission of a data packet through a kernel including an operating system and a network driver within the terminal 201.

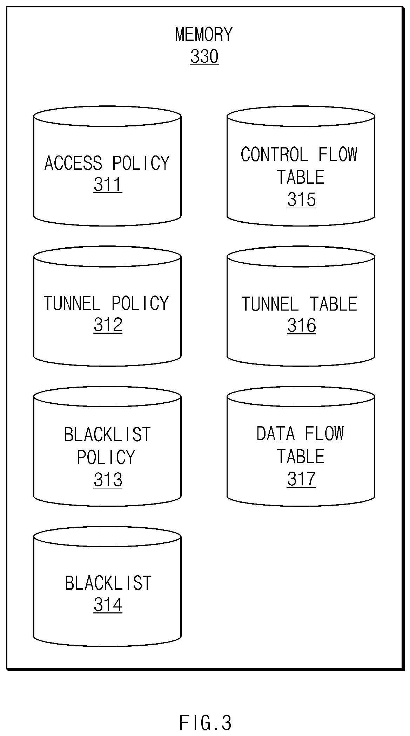

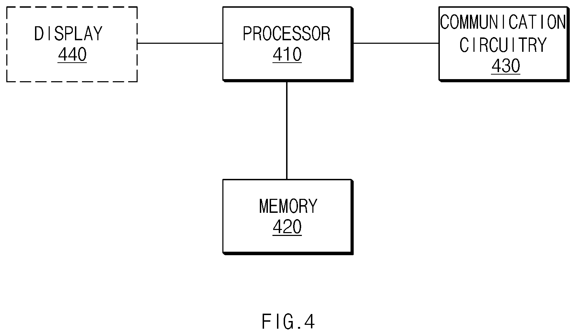

FIG. 3 is a functional block diagram illustrating a database stored in a controller (e.g., the controller 202 of FIG. 2), according to various embodiments. FIG. 3 illustrates only a memory 330. However, a controller may further include a communication circuit (e.g., a communication circuit 430 of FIG. 4) for communicating with an external electronic device (e.g., the terminal 201 or the gateway 203 in FIG. 2) and a processor (e.g., a processor 410 of FIG. 4) for controlling overall operations of the controller.

Referring to FIG. 3, the controller may store, in the memory 330, databases 311 to 317 for controlling network access and data transmission.

The access policy database 311 may include information about a network and/or service capable of being accessed by an identified network, terminal, user, or application. For example, when a request for access to the destination network is received from the terminal, the controller may determine whether the identified network (e.g., a network to which the terminal belongs), terminal, user (e.g., a user of the terminal), and/or application (e.g., an application included in the terminal) is capable of accessing a destination network, based on the access policy database 311.

The tunnel policy database 312 may include an encryption method, encryption level information, and the type of a tunnel, which is to be connected between a source node (e.g., a terminal) and a gateway present on the boundary of a network on a connection path. For example, when a request for the access to the destination network is received from a terminal, the controller may provide the terminal with an optimal tunnel for accessing the destination network and information about the optimal tunnel based on the tunnel policy database 312.

The blacklist policy database 313 may include a policy for permanently or temporarily blocking the access of a specific terminal. The blacklist policy database 313 may be generated based on information (e.g., at least one of a terminal identifier (ID), an IP address, a media access control (MAC) address, or a user ID) identified through the risk level, occurrence period, and/or behavioral analysis of a security event among security events periodically collected at a terminal or gateway.

The blacklist database 314 may include a list of at least one of a terminal, an IP address, a MAC address, or a user blocked based on the blacklist policy database 313. For example, when identification information of the terminal requesting for access to the destination network is included in the blacklist database 314, the controller may isolate the terminal from the destination network by denying the access request of the terminal.

The control flow table 315 is an example of a session table for managing a flow (e.g., a control flow) of a control data packet generated between a terminal and a controller. When the terminal successfully accesses the controller, the control flow information may be generated by the controller. The control flow information may include at least one of identification information of the control flow, an IP address, a terminal ID, or a user ID which is identified during access to the controller or authentication for the controller. For example, when a request for the access to the destination network is received from the terminal, the controller may search for the control flow information through control flow identification information received from the terminal and then may map at least one of an IP address, a terminal ID, or a user ID included in the found control flow information onto the access policy database 311. Accordingly, the controller may determine whether access of the terminal is possible and whether to generate a tunnel.

According to an embodiment, the control flow may have an expiration time. The terminal needs to update the expiration time of the control flow. When the expiration time is not updated during a specific time, the control flow (or the control flow information) may be removed. Besides, when it is determined, depending on the security event collected from the terminal or gateway, that there is a need for immediate access blocking, the controller may remove the control flow depending on an access termination request of the terminal. Because the pre-generated tunnel and data flow are also removed when the control flow is removed, the terminal may be blocked from accessing to the network.

The tunnel table 316 is a table for managing a tunnel connected between the terminal and the gateway. For example, the tunnel may be generated in units of devices or IPs. When a tunnel is generated between the terminal and the gateway, the tunnel table 316 may include tunnel identification information, control flow identification information when the tunnel is dependent on the control flow, a tunnel end point (TEP), a tunnel start point (TSP), a tunnel algorithm, a tunnel type, and/or additional information for managing the tunnel.

The data flow table 317 is a table for managing a flow (e.g., a data flow) through which the detailed data packet is transmitted between the terminal and the gateway. The data flow may be generated in units of TCP sessions, in units of source terminal applications, or in more detailed units within a tunnel generated in units of terminals or IPs. The data flow table 317 may include data flow identification information, control flow identification information when the data flow is dependent on the control flow, an application ID for determining whether a data packet transmitted from the terminal is an authorized data packet, a destination IP address, and/or a service port. Also, the data flow table 317 may include identification information of a tunnel, through which a data flow is to be used. Moreover, the data flow table 317 may include a header (or header information) for determining whether a data packet is valid. Furthermore, the data flow table 317 may further include whether a data flow header, which is authentication information, is inserted into a data packet, a method of inserting a header, whether the authentication of a data flow is required, an authentication state of a data flow, and/or an authentication expiration time of a data flow.

FIG. 4 is a functional block diagram of a terminal (e.g., the terminal 201 of FIG. 2), according to various embodiments.

Referring to FIG. 4, a terminal may include the processor 410, a memory 420, and the communication circuit 430. According to an embodiment, the terminal may further include a display 440 for interfacing with a user.

The processor 410 may control overall operations of the terminal. In various embodiments, the processor 410 may include a single processor core or may include a plurality of processor cores. For example, the processor 410 may include a multi-core such as a dual-core, a quad-core, a hexa-core, or the like. According to embodiments, the processor 410 may further include a cache memory positioned inside or outside the processor 410. According to embodiments, the processor 410 may be configured with one or more processors. For example, the processor 410 may include at least one of an application processor, a communication processor, or a graphical processing unit (GPU).

All or part of the processor 410 may be electrically or operatively coupled with or connected to another component (e.g., the memory 420, the communication circuit 430, or the display 440) within the terminal. The processor 410 may receive a command from other components of the terminal, may interpret the received command, and may perform calculations or process data depending on the interpreted command. The processor 410 may interpret and process messages, data, instructions, or signals received from the memory 420, the communication circuit 430, or the display 440. The processor 410 may generate new messages, data, instructions, or signals based on the received messages, data, instructions, or signals. The processor 410 may provide the processed or generated messages, data, instructions, or signals to the memory 420, the communication circuit 430, or the display 440.

The processor 410 may process data or signals, which is generated by a program and occurs in a program. For example, the processor 410 may request instructions, data, or signals from the memory 420 to execute or control a program. The processor 410 may write (or store) or update instructions, data, or signals to the memory 420 to execute or control the program.

The memory 420 may store instructions for controlling the terminal, control command codes, control data, or user data. For example, the memory 420 may include at least one of an application program, an operating system (OS), middleware, or a device driver.

The memory 420 may include one or more of a volatile memory or a non-volatile memory. The volatile memory may include a dynamic random access memory (DRAM), a static RAM (SRAM), a synchronous DRAM (SDRAM), a phase-change RAM (PRAM), a magnetic RAM (MRAM), a resistive RAM (RRAM), a ferroelectric RAM (FeRAM), and the like. The non-volatile memory may include a read only memory (ROM), a programmable ROM (PROM), an electrically programmable ROM (EPROM), an electrically erasable programmable ROM (EEPROM), a flash memory, and the like.

The memory 420 may further include nonvolatile media (medium) such as a hard disk drive (HDD), a solid state disk (SSD), an embedded multimedia card (eMMC), and universal flash storage (UFS).

According to an embodiment, the memory 420 may store some of information included in a memory (e.g., the memory 330 of FIG. 3) of the controller. For example, the memory 420 may store the tunnel table 316 and the data flow table 317 that are described with reference to FIG. 3.

The communication circuit 430 may establish a wired or wireless communication connection between the terminal and an external electronic device (e.g., the controller 202 or the gateway 203 of FIG. 2) and may support communication execution through the established communication connection. According to an embodiment, the communication circuit 430 may include a wireless communication circuit (e.g., a cellular communication circuit, a short-range wireless communication circuit, or a global navigation satellite system (GNSS) communication circuit) or a wired communication module (e.g., a local area network (LAN) communication circuit or a power line communication circuit) and may communicate with the external electronic device by using a corresponding communication circuit among them through the short-range communication network such as a Bluetooth, a WiFi direct, or an infrared data association (IrDA)) or the long-distance communication network such as a cellular network, an Internet, or a computer network. The above-mentioned various communication circuits 430 may be implemented into one chip or may be respectively implemented into separate chips.

The display 440 may output content, data, or a signal. In various embodiments, the display 440 may display image data processed by the processor 410. In embodiments, the display 440 may be configured with an integrated touch screen by being coupled with a plurality of touch sensors (not shown) capable of receiving a touch input or the like. When the display 440 is configured with a touch screen, the plurality of touch sensors may be disposed above the display 440 or below the display 440.

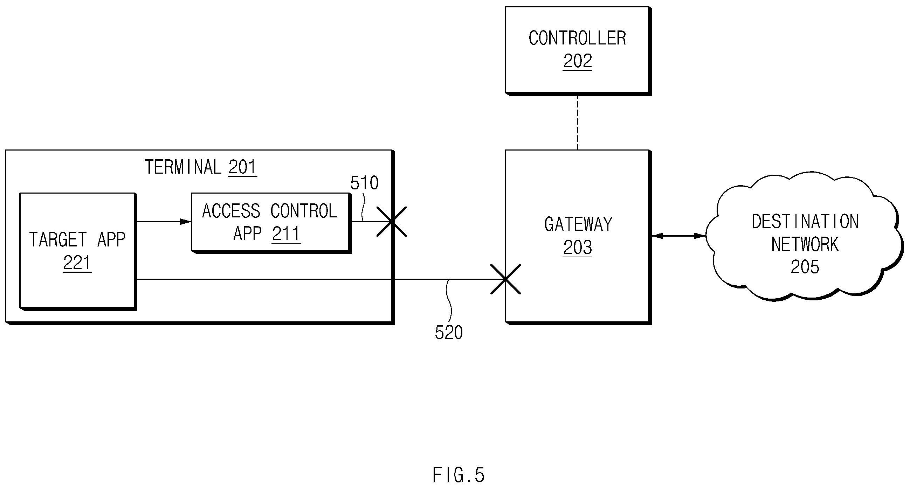

FIG. 5 illustrates an operation of controlling transmission of a data packet, according to various embodiments.

Referring to FIG. 5, the access control application 211 may detect a request for access to the destination network 205 of the target application 221 and then may determine whether the terminal 201 or the target application 221 is connected to the controller 202. When the terminal 201 or the target application 221 is not connected to the controller 202, the access control application 211 may block transmission of a data packet from a kernel including an operating system or network driver (operation 510). The terminal 201 may block the access of a malicious application in the application layer of an OSI layer in advance through the access control application 211.

According to another embodiment, when the access control application 211 is not installed in the terminal 201 or a malicious application bypasses the control of the access control application 211, an unauthorized data packet may be transmitted from the terminal 201. In this case, the gateway 203, which is present on the boundary of a network, blocks data packets received through an unauthorized tunnel (operation 520), a data packet (e.g., a data packet for generating a TCP session) transmitted from the terminal 201 may not reach the destination network 205. In other words, the terminal 201 may be isolated from the destination network 205.

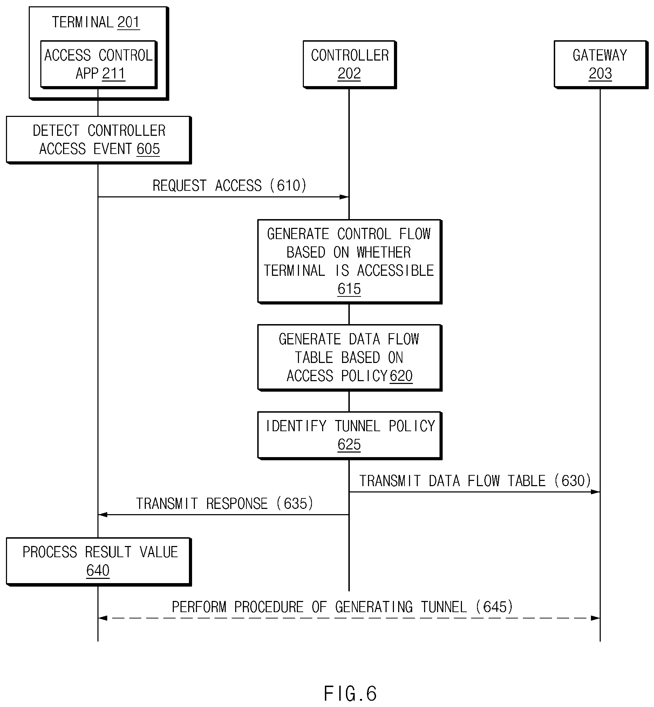

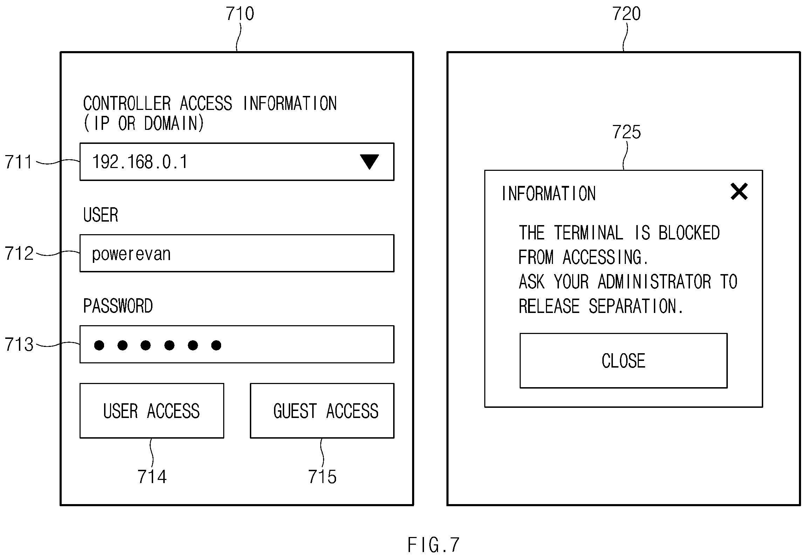

FIGS. 6 and 7 illustrate an operation of accessing a controller, according to various embodiments. FIG. 6 shows a signal flow diagram for accessing a controller. FIG. 7 shows a user interface screen for accessing a controller.

For the terminal 201 to connect to a destination network (e.g., the destination network 205 in FIG. 2), there is a need to be authorized by the controller 202, and thus the access control application 211 of the terminal 201 may attempt to access a controller of the terminal 201, by requesting the controller 202 to generate a control flow.

Referring to FIG. 6, in operation 605, the terminal 201 may detect a controller access event. For example, the access control application 211 is installed and executed within the terminal 201, and then the terminal 201 may detect that access to the controller 202 is requested, through the access control application 211.

For example, referring to FIG. 7, when the access control application 211 is executed, the terminal 201 may display a user interface screen 710 for receiving information necessary to access a controller. The user interface screen 710 may include an input window 711 for entering an IP or domain of the controller 202, an input window 712 for entering a user ID, and/or an input window 713 for entering a password. After information about the input windows 711 to 713 are entered, the terminal 201 may detect a controller access event by receiving a button 714 that allows an authenticated user to access the controller. As another example, when user authentication of the terminal 201 is not yet completed, the terminal 201 may detect the controller access event by receiving a button 715 that allows an unauthorized user (i.e., a guest) to access the controller.

In operation 610, the terminal 201 may make a request for controller access to the controller 202 in response to detecting the controller access event. The terminal 201 may request controller access through the access control application 211. According to an embodiment, the access control application 211 may transmit, to the controller 202, identification information (e.g., a terminal ID, an IP address, or an MAC address) of the terminal 201, the type of the terminal 201, the location of the terminal 201, the environment of the terminal 201, identification information of a network to which the terminal 201 belongs, and/or identification information of the access control application 211.

In operation 615, the controller 202 may identify whether the terminal 201 is accessible, in response to the received request. According to an embodiment, the controller 202 may determine whether the terminal 201 is accessible, based on a database included in a memory (e.g., the memory 330 in FIG. 3) of the controller 202. For example, the controller 202 may determine whether the terminal 201 is accessible, based on whether the information received from the access control application 211 is included in the access policy database and whether the identification information of the terminal 201 and/or a network to which the terminal 201 belongs is included in a blacklist database. When the terminal 201 is accessible, the controller 202 may generate a control flow between the terminal 201 and the controller 202. In this case, the controller 202 may generate control flow identification information in a form of random numbers and then may store the identification information of the terminal 201 and/or the network, to which the terminal 201 belongs, in a control flow table. Information (e.g., control flow identification information and/or control flow information) stored in the control flow table may be used for user authentication of the terminal 201, information update of the terminal 201, policy check for network access of the terminal 201, and/or a validity check.

In operation 620, the controller 202 may generate a data flow in which an accessible application (e.g., a target application) and identification information (e.g., IP or port information) of an access target (e.g., a destination network) are listed, by identifying the access policy matching the identified information (e.g., identification information of the terminal 201 or the network to which the terminal 201 belongs). For example, the controller 202 may add a data flow table (e.g., 317 of FIG. 3) to the memory 330. The data flow table may include at least one of an authentication method in which the terminal 201 and the gateway 203 determines whether a data packet is authorized, an authentication header generating method, or fixed header information.

In operation 625, the controller 202 may identify a tunnel policy to identify the tunnel information necessary to access the network indicated by the data flow table. The tunnel policy may include TEP, a tunnel type, and method information. The controller 202 may generate information necessary to generate a tunnel between a terminal, which is TSP, and a gateway, which TEP, and then may update information associated with the tunnel generated in the data flow table. For example, the information necessary to generate a tunnel may include at least one of a tunnel type, a method, authentication information, a TEP IP, or a port. When there is no tunnel policy capable of being newly generated, the controller 202 may delete a data flow, which is required by the corresponding tunnel, from the data flow table.

In operation 630, the controller 202 may transmit, to the gateway 203, the generated data flow table information and the information necessary to generate a tunnel. When a pre-generated tunnel in which the gateway 203 is TEP is present, the controller 202 may transmit data flow table information and information for using the pre-generated tunnel. When there is no generated data flow information, the controller 202 may not transmit information.

In operation 635, the controller 202 may transmit, to the terminal 201, a response to the controller access request. In this case, the controller 202 may transmit, to the terminal 201, control flow identification information, data flow table information, and information necessary to generate a tunnel. The control flow identification information may be used to identify a control flow used for controller access completion of the terminal 201 to the controller 202, user authentication, or information update of the terminal 201. When there is no generated data flow information, the controller 202 may transmit information excluding the data flow information. When the pre-generated tunnel is present, the controller 202 may transmit information for using the pre-generated tunnel together with data flow information and control flow identification information.

When the terminal 201 is not accessible or the data flow information fails to be transmitted to the gateway, the controller 202 may transmit an access unavailable result to the terminal 201 in operation 635. For example, when the identification information of the terminal 201 and/or the network to which the terminal 201 belongs is included in a blacklist database, the controller 202 may determine that access of the terminal 201 is impossible. In this case, the controller 202 may transmit a response indicating that the access of the terminal 201 is impossible, without generating a control flow.

In operation 640, the terminal 201 may process a result value depending on the received response. For example, the access control application 211 may store the received control flow identification information and then may display a user interface screen indicating that controller access is completed, to the user. When the controller access is completed, a request for network access of the terminal 201 to a destination network may be controlled by the controller 202.

According to another embodiment, when receiving a response indicating that the access of the terminal 201 is impossible, in operation 640, the terminal 201 may output a user interface screen indicating that the access of the terminal 201 is impossible, to the user. For example, referring to FIG. 7, the terminal 201 may display a user interface screen 720 through the access control application 211. The user interface screen 720 indicates that access of the terminal 201 is blocked, and may include a user interface 725 for guiding the release of isolation through an administrator (e.g., the controller 202).

When there is a need to generate a new tunnel, in operation 645, the terminal 201 (or the access control application 211) may perform a procedure of generating a tunnel by making a request for generating a tunnel to the gateway 203 corresponding to the TEP, based on information received from the controller 202. The terminal 201 may add information about the generated tunnel to the tunnel table. When the tunnel fails to be generated, the terminal 201 may display a user interface screen indicating that it is impossible to generate a tunnel, and then may delete data flow information capable of being accessed through the corresponding tunnel.

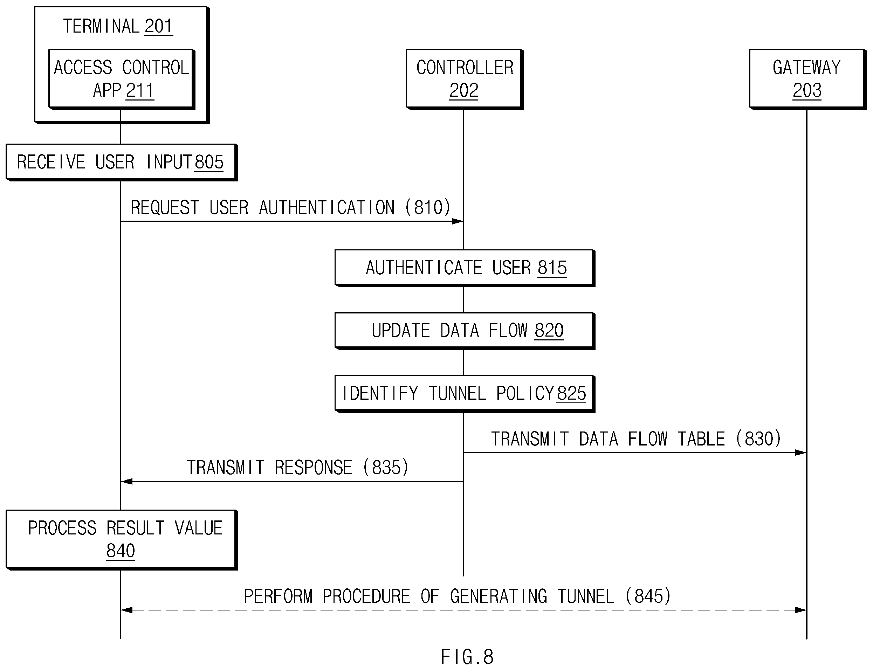

FIG. 8 illustrates a signal flow diagram for user authentication, according to various embodiments.

For the terminal 201 to receive a permission to access a destination network, the access control application 211 of the terminal 201 may receive authentication for a user of the terminal 201 from the controller 202.

Referring to FIG. 8, in operation 805, the terminal 201 may receive an input for user authentication. For example, the input for user authentication may be a user input for entering a user ID and password. As another example, the input for user authentication may be a user input (e.g., biometric information) for more enhanced authentication.

In operation 810, the terminal 201 may make a request for user authentication to the controller 202. For example, the access control application 211 may transmit input information for user authentication to the controller 202. When the control flow between the terminal 201 and the controller 202 is already generated, the access control application 211 may transmit the input information for user authentication together with control flow identification information.

In operation 815, the controller 202 may authenticate a user based on information received from the terminal 201. For example, the controller 202 may determine whether the user is accessible depending on an access policy and whether the user is included in a blacklist, based on a user ID, a password, and/or enhanced authentication information, which are included in the received information, and a database (e.g., the access policy database 311 or the blacklist database 314 of FIG. 3) included in a memory of the controller 202.

When the user is authenticated, the controller 202 may add identification information (e.g., user ID) of the user in the control flow table corresponding to the received identification information of a control flow. The added user identification information may be used for the authenticated user's controller access or network access.

In operation 820, the controller 202 may update a data flow in which an accessible application and identification information of an access target are listed, by identifying an access policy matching the identified information (e.g., identification information of the terminal 201 or a network to which the terminal 201 belongs). For example, the controller 202 may add a data flow table (e.g., 317 of FIG. 3) to the memory 330. The data flow table may include at least one of an authentication method in which the terminal 201 and the gateway 203 determines whether a data packet is authorized, an authentication header generating method, or fixed header information.

In operation 825, the controller 202 may identify a tunnel policy to identify the tunnel information necessary to access the network indicated by the data flow table. The tunnel policy may include TEP, a tunnel type, and method information. The controller 202 may generate information necessary to generate a tunnel between a terminal, which is TSP, and a gateway, which TEP, and then may update information associated with the tunnel generated in the data flow table. For example, the information necessary to generate a tunnel may include at least one of a tunnel type, a method, authentication information, a TEP IP, or a port. When there is no tunnel policy capable of being newly generated, the controller 202 may delete a data flow, which is required by the corresponding tunnel, from the data flow table.

In operation 830, the controller 202 may transmit, to the gateway 203, the updated data flow table information and the information necessary to generate a tunnel. When a pre-generated tunnel in which the gateway 203 is TEP is present, the controller 202 may transmit data flow table information and information for using the pre-generated tunnel. When there is no updated data flow information, the controller 202 may not perform operation 830.

In operation 835, the controller 202 may transmit, to the terminal 201, a response to a user authentication request. In this case, the controller 202 may transmit, to the terminal 201, the result of the user authentication request, control flow identification information, the updated data flow table information, and information necessary to generate a tunnel. When there is no updated data flow information, the controller 202 may transmit information excluding the data flow information. When the pre-generated tunnel is present, the controller 202 may transmit information for using the pre-generated tunnel instead.

According to another embodiment, the controller 202 may determine that user authentication is impossible. For example, when identification information of the user is included in a blacklist database, the controller 202 may determine that the user authentication is impossible. In this case, the controller 202 may omit operation 820 and operation 825 and may transmit information indicating that the user authentication is impossible, to the terminal 201 in operation 835.

In operation 840, the terminal 201 may process a result value depending on the received response. For example, the access control application 211 may display a user interface screen indicating that the user authentication is completed, to the user. When information indicating that user authentication is impossible is received, the terminal 201 may display a user interface screen indicating that the user authentication has failed.

When there is a need to generate a new tunnel, in operation 845, the terminal 201 (or the access control application 211) may perform a procedure of generating a tunnel by making a request for generating a tunnel to the gateway 203 corresponding to the TEP, based on information received from the controller 202. The terminal 201 may add information about the generated tunnel to the tunnel table. When the tunnel fails to be generated, the terminal 201 may display a user interface screen indicating that it is impossible to generate a tunnel, and then may delete data flow information capable of being accessed through the corresponding tunnel.

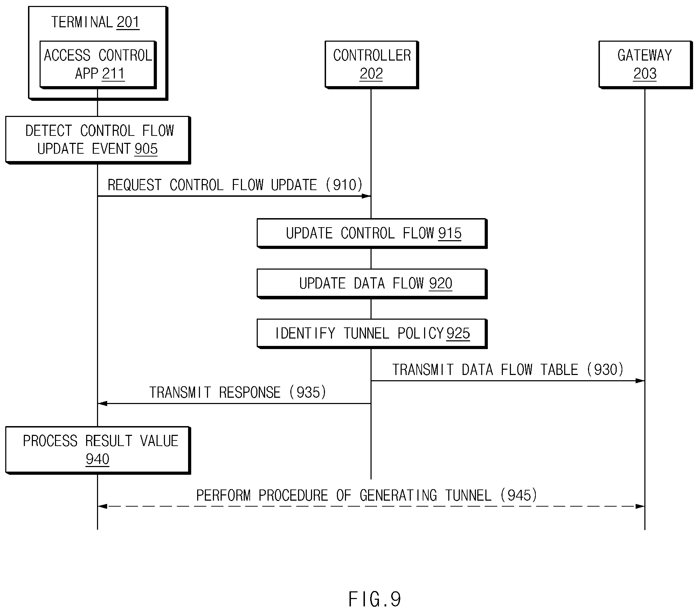

FIG. 9 illustrates a flowchart of a signal for updating a control flow, according to various embodiments.

The terminal 201 may receive changed data flow information from the controller 202 by updating a control flow for each specified period.

Referring to FIG. 9, in operation 905, the terminal 201 may detect a control flow update event. For example, the access control application 211 may detect a control flow update event at a specified period.

In operation 910, the terminal 201 may request control flow update from the controller 202. The requested information may include identification information of the control flow between the terminal 201 and the controller 202.

In operation 915, the controller 202 may determine whether the terminal 201 is accessible, through a method similar to operation 615 of FIG. 6, and then may update the control flow based on the determined result.

When the control flow is updated, in operation 920, the controller 202 may update a data flow in which an accessible application and identification information of an access target are listed, by identifying an access policy matching the identified information (e.g., identification information of the terminal 201 or a network to which the terminal 201 belongs). For example, the controller 202 may add a data flow table (e.g., 317 of FIG. 3) to the memory 330. The data flow table may include at least one of an authentication method in which the terminal 201 and the gateway 203 determines whether a data packet is authorized, an authentication header generating method, or fixed header information.

In operation 925, the controller 202 may identify a tunnel policy to identify the tunnel information necessary to access the network indicated by the data flow table. The tunnel policy may include TEP, a tunnel type, and method information. The controller 202 may generate information necessary to generate a tunnel between a terminal, which is TSP, and a gateway, which TEP, and then may update information associated with the tunnel generated in the data flow table. For example, the information necessary to generate a tunnel may include at least one of a tunnel type, a method, authentication information, a TEP IP, or a port. When there is no tunnel policy capable of being newly generated, the controller 202 may delete a data flow, which is required by the corresponding tunnel, from the data flow table.

In operation 930, the controller 202 may transmit, to the gateway 203, the updated data flow table information and the information necessary to generate a tunnel. When a pre-generated tunnel in which the gateway 203 is TEP is present, the controller 202 may transmit data flow table information and information for using the pre-generated tunnel. When there is no updated data flow information, the controller 202 may not perform operation 930.

In operation 935, the controller 202 may transmit, to the terminal 201, a response to a control flow update request. In this case, the controller 202 may transmit, to the terminal 201, control flow identification information, updated data flow table information, and information necessary to generate a tunnel. When there is no updated data flow information, the controller 202 may transmit information excluding the data flow information. When the pre-generated tunnel is present, the controller 202 may transmit information for using the pre-generated tunnel instead.

In operation 940, the terminal 201 may process a result value depending on the received response. For example, when there is a need to generate a new tunnel, in operation 945, the terminal 201 (or the access control application 211) may perform a procedure of generating a tunnel by making a request for generating a tunnel to the gateway 203 corresponding to the TEP, based on information received from the controller 202. The terminal 201 may add information about the generated tunnel to the tunnel table. When the tunnel fails to be generated, the terminal 201 may display a user interface screen indicating that it is impossible to generate a tunnel, and then may delete data flow information capable of being accessed through the corresponding tunnel.

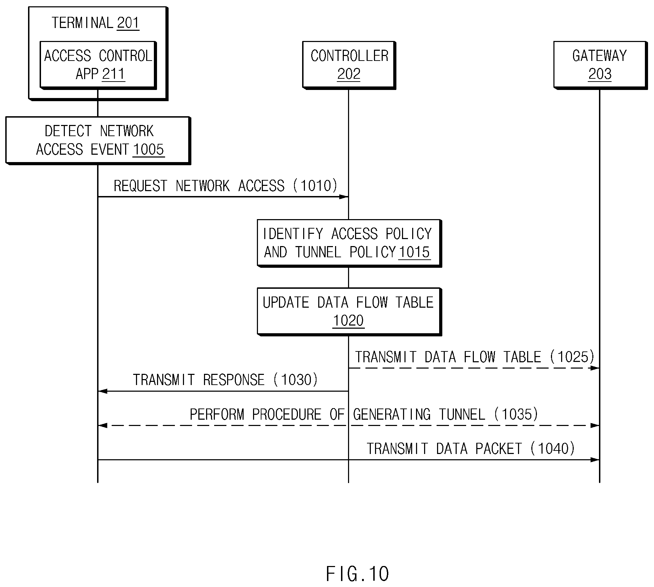

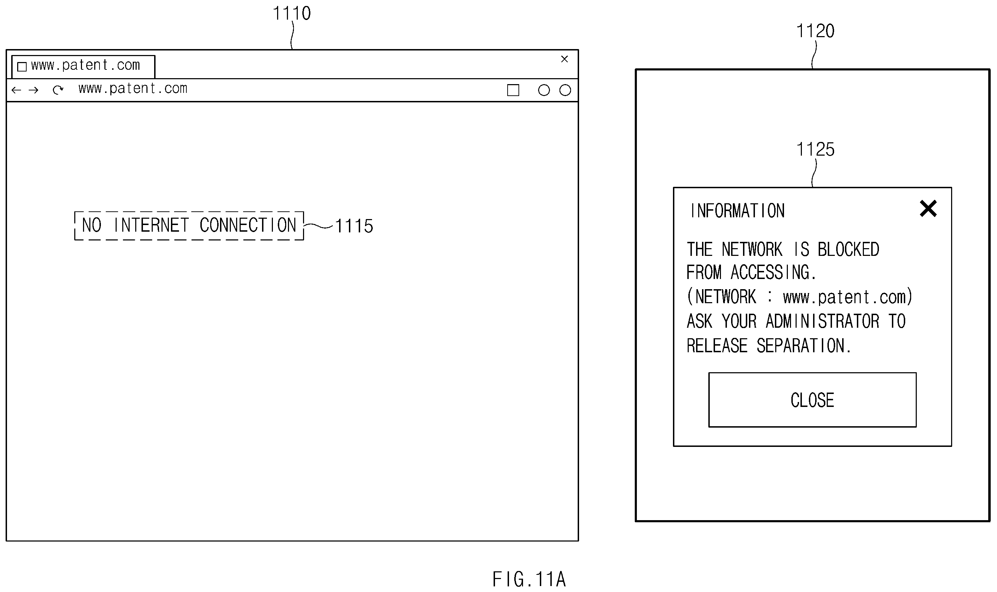

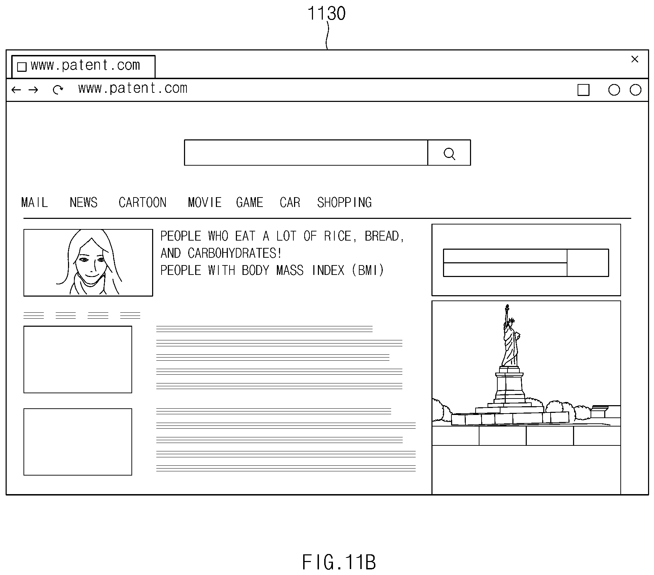

FIGS. 10, 11A, and 11B describe an operation of controlling network access, according to various embodiments. FIG. 10 illustrates a flowchart of a signal for controlling network access. FIG. 11A illustrates a user interface screen when network access is blocked. FIG. 11B illustrates a user interface screen when network access is permitted.

After the terminal 201 is authorized from the controller 202, the terminal 201 may guarantee reliable data transmission by controlling network access of other applications stored in the terminal 201 through the access control application 211 of the terminal 201.

Referring to FIG. 10, in operation 1005, the access control application 211 may detect a network access event. For example, the access control application 211 may detect that a target application such as a web browser attempts to access a destination network such as the Internet. For example, a user may launch a web browser and may enter and call a web address to be accessed.

In operation 1010, the access control application 211 may make a request for network access of the target application to the controller 202. In this case, the access control application 211 may transmit, to the controller 202, identification information of a target application, an IP of an access target, and/or service port information together with identification information of the control flow generated between the terminal 201 and the controller 202.

In operation 1015, the controller 202 may identify an access policy and a tunnel policy based on the request received from the access control application 211. For example, the controller 202 may determine whether access of the target application is possible, based on whether information received from the access control application 211 satisfies an access policy of the controller 202. When the access of the target application is impossible, in operation 1030, the controller 202 may transmit, to the terminal 201, information indicating that access is impossible. In this case, the access control application 211 may drop a data packet of the target application and may display a user interface screen indicating that access to the network is impossible.

When the access to the network is possible, the controller 202 may determine whether an authorized tunnel is present between the terminal 201 and the gateway 203. For example, the controller 202 may identify a TEP and/or a tunnel type in a tunnel policy corresponding to a destination network and then may determine whether an authorized tunnel corresponding to the identified TEP is present in a tunnel table. When an authorized tunnel is present, the controller 202 may generate a tunnel ID of the pre-generated tunnel and information included in the data flow table, and may transmit the generated information to the terminal 201 in operation 1030. When an authorized tunnel is not present, the controller 202 may generate information (e.g., a tunnel type, a method, authentication information, and/or the IP and port of TEP) required to generate a tunnel and information included in a data flow table and then may transmit the generated information to the gateway 203 and the terminal 201 (in operation 1025 and operation 1030).

As another example, when a tunnel, which satisfies a tunnel policy, from among tunnels to be generated between the terminal 201 and the gateway 203 is not present, in operation 1030, the controller 202 may notify the terminal 201 that network access is impossible. In this case, the access control application 211 may drop a data packet of the target application and may display a user interface screen indicating that network access is impossible.

In operation 1020, the controller 202 may update the data flow based on information about a tunnel to which the data packet is to be transmitted and information about a control flow allocated to the terminal 201.

In operation 1025, the controller 202 may transmit, to the gateway 203, the updated data flow table information and the information necessary to generate a tunnel. When a pre-generated tunnel in which the gateway 203 is TEP is present, the controller 202 may transmit data flow table information and information for using the pre-generated tunnel. When there is no updated data flow information, the controller 202 may not perform operation 1025.

In operation 1030, the controller 202 may transmit, to the terminal 201, a response to a network access request. In this case, the controller 202 may transmit, to the terminal 201, updated data flow table information, and information necessary to generate a tunnel. When there is no updated data flow information, the controller 202 may transmit information excluding the data flow information. When the pre-generated tunnel is present, the controller 202 may transmit information for using the pre-generated tunnel instead.

The access control application 211 may process a result value depending on the response received in operation 1030. According to an embodiment, when receiving information indicating that network access of the target application is impossible or information indicating that an authorized tunnel is not present, from the controller 202, the access control application 211 may drop the data packet and may output a user interface screen indicating that the network access is impossible. For example, referring to FIG. 11A, the terminal 201 may output a user interface screen 1110 or 1120 indicating that the access to the destination network is blocked, through the display. The user interface screen 1110 or 1120 may include a text 1115 or a pop-up window 1125, which indicates that access is blocked.

According to another embodiment, when information required to generate a tunnel is received from the controller 202, the access control application 211 may generate a tunnel to be connected to the gateway 203 in operation 1035 and then may transmit the data packet of the target application through the generated tunnel in operation 1040. In this case, the access control application 211 may manipulate a data packet depending on a data flow and a tunnel rule, and then may transmit the manipulated data packet. For example, the access control application 211 may insert a header for authentication depending on the method indicated by the data flow table. The access control application 211 may receive a data packet from the destination network and may process data provided by the destination network. For example, referring to FIG. 11B, the terminal 201 may output a screen 1130 provided from the destination network (e.g., a website), where access is allowed, through a display.

According to another embodiment, when receiving the tunnel ID of the existing tunnel from the controller 202, the access control application 211 may transmit a data packet of the target application to the gateway 203 through a tunnel corresponding to the tunnel ID in operation 1040 without performing an additional tunnel generation procedure.

According to an embodiment, before performing operation 1010, the access control application 211 may identify identification information (e.g., an IP address or service port information) of the target application and the destination network, and then may determine whether the authorized data flow and authorized tunnel, which correspond to information identified in a data flow table stored in the memory of the terminal 201, are present. When the authorized data flow and the authorized tunnel are present, the access control application 211 may transmit the data packet to the gateway 203 through the authorized tunnel in operation 1040 without requesting network access. In this case, the access control application 211 may manipulate a data packet depending on a data flow and a tunnel rule, and then may transmit the manipulated data packet. When the authorized tunnel or the authorized data flow is not present, the access control application 211 may request network access in operation 1010.

According to one embodiment, when the authorized tunnel is not present, the access control application 211 may further check validity of the target application before requesting network access to guarantee the integrity and stability of the target application. For example, the access control application 211 may determine whether the target application is forged or tampered, or may test a code signing check and/or a fingerprint check. As another example, the access control application 211 may determine whether a target application, an access target IP, and a service port are accessible, based on an access policy database received from the controller 202. When validity check of the target application fails, the access control application 211 may drop a data packet without requesting network access. In this case, the access control application 211 may display a user interface screen indicating that network access is impossible. When the validity check of the target application is successful, the access control application 211 may request network access in operation 1010.

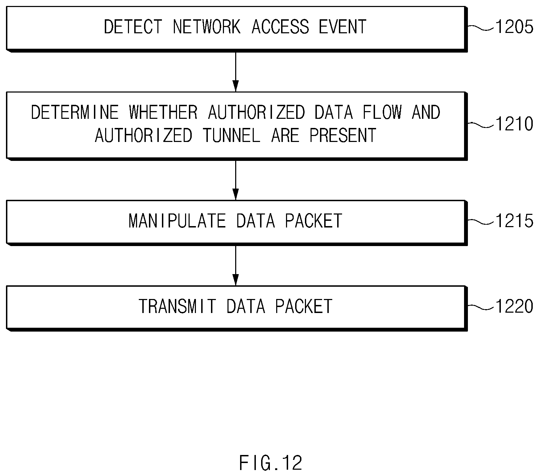

FIG. 12 is a flowchart illustrating an operation for controlling network access in a terminal, according to the invention. Operations described below may be performed through the terminal 201 of FIG. 10. For example, a terminal may perform operations of FIG. 12 by executing instructions stored in a memory through a processor. The instructions stored in the memory may be software or programs such as the access control application 211 of FIG. 10.

Referring to FIG. 12, in operation 1205, the terminal may detect a network access event. For example, when a user attempts to access a destination network through a target application such as a specific web browser, the terminal may detect the network access event.

In operation 1210, the terminal may determine whether a data flow and a tunnel, which correspond to the target application and a destination network and which are authorized by an external server (e.g., the controller 202 in FIG. 10), are present. For example, the access control application may determine whether the data flow and the tunnel, which correspond to identification information of the target application and the destination network (e.g., a destination IP), are present in a data flow table stored in the terminal.

When the authorized data flow and the authorized tunnel are present, in operation 1215, a terminal may manipulate a data packet based on the data flow. For example, the access control application may insert a header for authentication into the data packet based on the data flow table.

In operation 1220, the terminal may transmit the manipulated data packet.

According to another embodiment, when the authorized data flow or the authorized tunnel is not present, the terminal may drop the data packet or may make a request for network access to an external server.

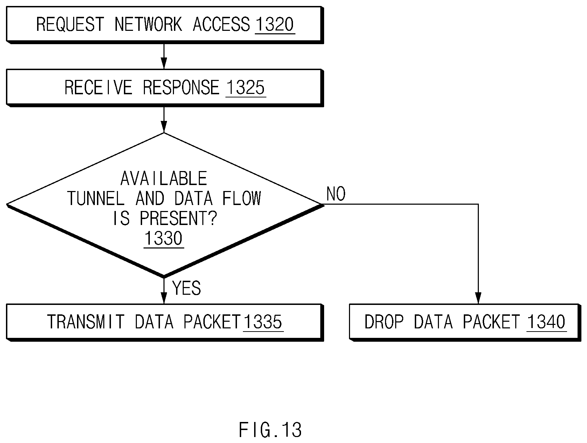

FIG. 13 illustrates a flowchart of another operation for controlling network access in a terminal, according to various embodiments. The operation flowchart shown in FIG. 13 may be performed after operation 1210 of FIG. 11.

When an authorized data flow or an authorized tunnel is not present, in operation 1320, the terminal may make a request for network access to an external server. For example, the external server may be a server that manages the network access of a terminal as shown in the controller 202 of FIG. 10. The terminal may be a terminal registered in an external server through a separate authentication procedure. For example, the authentication procedure may be the controller access of FIG. 6 or the user authentication procedure of FIG. 8. In this case, a control flow between the terminal and the external server may be generated. According to an embodiment, the terminal may transmit, to the external server, identification information of a target application, IP of an access target, and identification information of a control flow between the terminal and the external server for a network access request.

In operation 1325, the terminal may receive a response to the network access request from the external server. The received response may include whether access of the target application to the destination network is possible, information about a data flow between the target application and the destination network, whether the authorized tunnel is present between the target application and the destination network, information about the authorized tunnel (e.g., identification information) when the authorized tunnel is present, and/or information necessary to generate the authorized tunnel when the authorized tunnel is not present.

In operation 1330, the terminal may determine whether there is an available tunnel (or a valid tunnel) and data flow, based on the received response. When the data flow is present and an already-generated available tunnel or a tunnel capable of being generated is present, in operation 1335, the terminal may transmit the data packet of the target application through a tunnel. When there is no data flow or no tunnel available, in operation 1340, the terminal may drop the data packet.

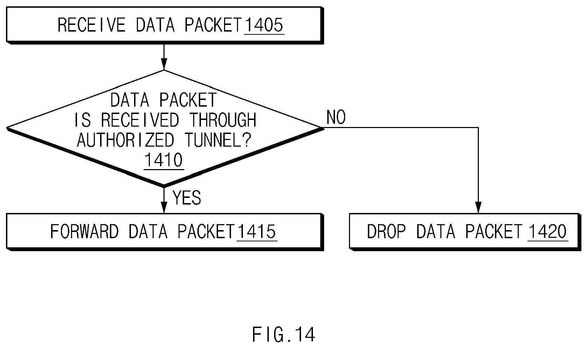

FIG. 14 illustrates a flowchart of an operation for controlling network access in a gateway, according to various embodiments. Operations described below may be performed through the gateway 203 of FIG. 10.

Referring to FIG. 14, in operation 1405, a gateway may receive a data packet from a terminal (e.g., the terminal 201 of FIG. 10).

In operation 1410, the gateway may determine whether the received data packet is received through the authorized tunnel. For example, the authorized tunnel may be a tunnel, which is generated under the control of an external server (e.g., the controller 202 in FIG. 10) and which is positioned between the gateway and the terminal.

When the data packet is received through the authorized tunnel, in operation 1415, the gateway may forward the data packet to the destination network. When the data packet is not received through the authorized tunnel, in operation 1420, the gateway may drop the data packet.

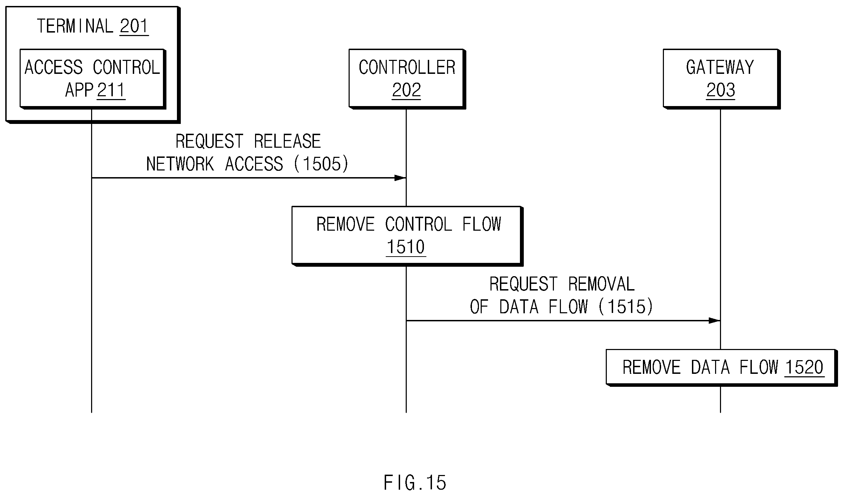

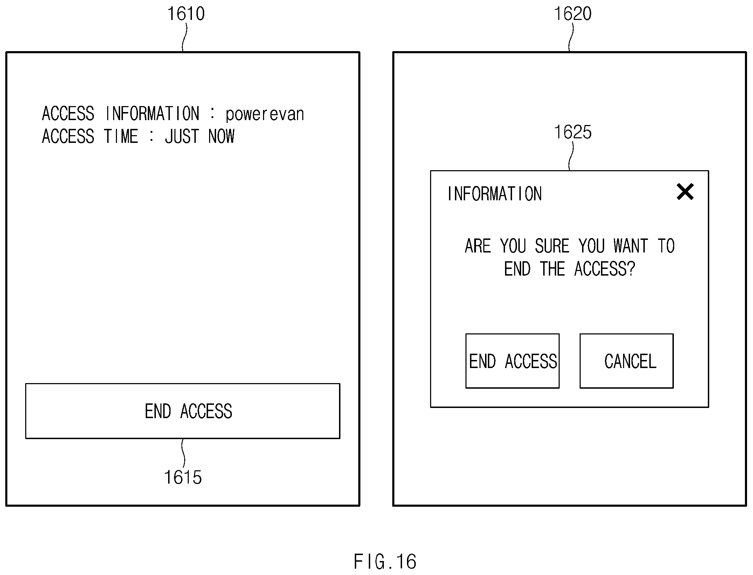

FIGS. 15 to 16 describe an operation for releasing network access, according to various embodiments. FIG. 15 illustrates a signal flow diagram for releasing network access. FIG. 16 illustrates a user interface screen for releasing network access.

Referring to FIG. 15, in operation 1505, the terminal 201 may make a request for releasing network access to the controller 202. For example, the terminal 201 may transmit, to the controller 202, identification information of a control flow between the terminal 201 and the controller 202 together with information requesting the release of the network access.

According to an embodiment, the terminal 201 may attempt to release the network access in response to a network access release event, such as a user's request, the restart of the terminal 201, or a request of the access control application 211. For example, referring to FIG. 16, the terminal 201 may receive a user input for selecting an access end button 1615 from a user interface screen 1610 output through a display. The terminal 201 may identify access termination to the user again by outputting a user interface screen 1620 including a pop-up window 1625. As another example, the terminal 201 may promptly perform operation 1505 without outputting the user interface screen 1620.

In operation 1510, the controller 202 may remove (or release) a control flow corresponding to the received identification information in response to a request of the terminal 201.

In operation 1515, the controller 202 may request the gateway 203 to remove a tunnel and a data flow, which are dependent on the removed control flow. There may be a plurality of tunnels dependent on the control flow to be removed. In this case, the controller 202 may request the removal of all tunnels dependent on the control flow to be removed.

In operation 1520, the gateway 203 may remove the tunnel and data flow in response to the request of the controller 202. When the tunnel and data flow are removed, a data packet transmitted to a destination network corresponding to the removed tunnel and the removed data flow may be blocked by the access control application 211 or the gateway 203. Through the above-described operation, the system including the terminal 201 may provide complete blocking and isolation for a network of the terminal 201 by removing the authorized tunnel and the authorized data flow when necessary.

## Claims

1. A node (201) comprising:
a communication circuit (430);
a processor (410) operatively connected to the communication circuit (430); and
a memory (420) operatively connected to the processor (410) and configured to store a target application (221) and an access control application (211), wherein the memory (420) stores instructions that cause, when executed by the processor (410), the node (201) to:
detect (1205) an event of network access of the target application (221) to a destination network through the access control application (211);
determine (1210) whether a data flow and a tunnel, which correspond to identification information of the destination network and the target application (221) and which are authorized from an external server (202), are present, through the access control application (211);
insert (1215) a header for authentication into a data packet of the target application (221) based on a method of inserting a header indicated by a data flow table when the authorized data flow and the authorized tunnel are present; and transmit (1220) the manipulated data packet through the tunnel by using the communication circuit (430).

2. The node (201) of claim 1, further comprising:
a display (440),
wherein the instructions cause the node to:
output a screen provided from the destination network by using the display (440) when the authorized data flow and the authorized tunnel are present; and
output a user interface screen indicating that access to the destination network is not allowed, by using the display (440) when the data flow and the tunnel are not present.

3. The node (201) of claim 1, wherein the instructions cause the node to:
Detect an event of controller access to the external server (202) through the access control application;
make a request for controller access to the external server (202) by using the communication circuit (430) in response to the detected event; and
receive a first response to the request for the controller access from the external server (202),
wherein the first response includes information about the authorized data flow and the authorized tunnel.

4. The node (201) of claim 3, wherein the instructions cause the node to:
receive a first user input for requesting user authentication;
make a request for user authentication for a user of the node to the external server (202) by using the communication circuit (430), wherein the request for the user authentication includes information corresponding to the first user input; and
receive a second response to the request for the user authentication from the external server (202),
wherein the second response includes information about the authorized tunnel or information about an updated data flow.

5. The node (201) of claim 3, wherein the instructions cause the node to:
detect an update event of a control flow generated between the node and the external server (202);
request the external server (202) to update the control flow by using the communication circuit (430) in response to the detected update event; and
receive a third response to a request for user authentication from the external server (202),
wherein the third response includes information about the authorized tunnel or information about an updated data flow.

6. The node (201) of claim 1, wherein the instructions cause the node to:
drop a data packet of the target application when the authorized tunnel or the data flow is not present; or
make a request for network access to the destination network to the external server (202) by using the communication circuit (430), receive a fourth response to the request for the network access from the external server (202), determine whether an available tunnel and an available data flow are present, based on the fourth response, when the available tunnel and the data flow are present, manipulate the data packet of the target application based on the data flow, and transmit the manipulated data packet through the available tunnel by using the communication circuit (430), when the authorized tunnel or the data flow is not present.

7. The node (201) of claim 6, wherein the instructions cause the node to:
Generate a tunnel by using received information so as to be connected to a gateway (203) positioned on a boundary of the destination network when receiving the information for generating the available tunnel from the external server (202); and
transmit the data packet through the generated tunnel by using the communication circuit (430).

8. The node (201) of claim 6, further comprising:
a display (440),
wherein the instructions cause the node to:
output a screen provided from the destination network by using the display (440) when the data packet is transmitted; and
output a user interface screen indicating that access to the destination network is not allowed, by using the display (440) when the data packet is dropped.

9. The node (201) of claim 1,
receive a second user input for requesting release of a network access; and
make a request for the release of the network access to the external server (202) in response to the second user input.

10. A System comprising a node according to one of the preceding claims and a server (202), the server (202) comprising:
a communication circuit (430);
a memory (330) configured to store a database; and
a processor (410) operatively connected to the communication circuit (430) and the memory (330),
wherein the processor (410) is configured to:
receive (1320) a first request for controller access to the server (202) from a node (201), wherein the first request includes identification information of at least one of the node (201), an access control application (211) stored in the node (201), or a network to which the node (201) belongs;
determine (615) whether the node (201) is accessible, based on the identification information included in the first request and the database;
generate a control flow between the node (201) and the server (202) when the node (201) is accessible;
generate (620) a data flow between the node (201) and a destination network capable of being accessed by the node (201), based on the database;
transmit (630) identification information of the generated control flow and information about the generated data flow by using the communication circuit (430) to the node (201) and a gateway (203) positioned on a boundary of the destination network,
whereby the node (201) is caused to insert a header for authentication into a data packet of the target application (221) based on a method of inserting a header indicated by a data flow table when the authorized data flow and the authorized tunnel are present.

11. The system of claim 10, wherein the processor (410) of the server (202) is configured to:
by using the communication circuit (430),
transmit identification information of an authorized tunnel to the node (201) and the gateway (203) when the authorized tunnel between the node (201) and the gateway (203) is present;
transmit information necessary to generate a tunnel to the node (201) and the gateway (203) when the authorized tunnel is not present; and
transmit information indicating that network access to the destination network is impossible, to the node (201) when there is no tunnel satisfying a policy included in the database.

12. The system of claim 11, wherein the processor (430) of the server (202) is configured to:
receive a second request for user authentication for a user of the node (201) through the control flow, wherein the second request includes identification information of the user associated with the user authentication;
authenticate the user of the node (201) based on information included in the second request and the database;
update the data flow and the tunnel; and
transmit a result of the user authentication and information about the updated data flow and the updated tunnel to the node (201) by using the communication circuit (430).

13. The system of claim 11, wherein the processor (410) of the server (202) is configured to:
Receive a third request for an update of the control flow from the node (201), wherein the third request includes the identification information of the control flow;
update the control flow based on the identification information included in the third request and the database;
update information about the data flow and the tunnel; and
transmit the updated information to the node (201).

14. The system of claim 11, wherein the processor (410) of the server (202) is configured to:
receive a fourth request for the network access of a target application (221), which is stored in the node, to the destination network, wherein the fourth request includes identification information of the control flow, identification information of the target application (221), and identification information of the destination network;
determine whether a data flow and an authorized tunnel between the target application (221) and the destination network are present, based on the identification information included in the fourth request; and
transmit a response indicating that access of the target application (221) to the destination network is impossible, to the node (201) when the data flow or the authorized tunnel are not present.

15. The system of claim 14, wherein the processor (410) of the server (202) is configured to:
receive a fifth request for release of the network access from the node (201);
remove the data flow in response to the fifth request; and
request the gateway (203) to remove the data flow by using the communication circuit (430).

## Patentansprüche

1. Knoten (201), Folgendes umfassend:
eine Kommunikationsschaltung (430),
einen Prozessor (410), der funktionsfähig mit der Kommunikationsschaltung (430) verbunden ist, und
einen Speicher (420), der funktionsfähig mit dem Prozessor (410) verbunden und dafür konfiguriert ist, eine Zielanwendung (221) und eine Zugriffssteuerungsanwendung (211) zu speichern, wobei der Speicher (420) Anweisungen speichert, die bei Ausführung durch den Prozessor (410) den Knoten (201) zu Folgendem veranlassen:
Erkennen (1205) eines Ereignisses eines Netzwerkzugriffs der Zielanwendung (221) auf ein Zielnetzwerk durch die Zugriffssteuerungsanwendung (211),
Bestimmen (1210), ob ein Datenstrom und ein Tunnel vorhanden sind, die Identifizierungsinformationen des Zielnetzwerks und der Zielanwendung (221) entsprechen und die von einem externen Server (202) autorisiert sind, durch die Zugriffssteuerungsanwendung (211),
Einfügen (1215) eines Headers zur Authentifizierung in ein Datenpaket der Zielanwendung (221), basierend auf einem Verfahren zum Einfügen eines Headers, der von einer Datenstromtabelle angegeben wird, wenn der autorisierte Datenstrom und der autorisierte Tunnel vorhanden sind, und
Übertragen (1220) des bearbeiteten Datenpakets durch den Tunnel unter Verwendung der Kommunikationsschaltung (430).

2. Knoten (201) nach Anspruch 1, ferner Folgendes umfassend:
eine Anzeige (440),
wobei die Anweisungen den Knoten zu Folgendem veranlassen:
Ausgeben eines Bildschirms, der von dem Zielnetzwerk bereitgestellt wird, unter Verwendung der Anzeige (440), wenn der autorisierte Datenstrom und der autorisierte Tunnel vorhanden sind, und
Ausgeben eines Bildschirms einer Benutzerschnittstelle, der angibt, dass der Zugriff auf das Zielnetzwerk nicht gestattet ist, unter Verwendung der Anzeige (440), wenn der autorisierte Datenstrom und der autorisierte Tunnel nicht vorhanden sind.

3. Knoten (201) nach Anspruch 1, wobei die Anweisungen den Knoten zu Folgendem veranlassen:
Erkennen eines Ereignisses eines Steuerungszugriffs auf den externen Server (202) durch die Zugriffssteuerungsanwendung,
Stellen einer Anfrage nach Steuerungszugriff auf den externen Server (202) unter Verwendung der Kommunikationsschaltung (430) als Antwort auf das erkannte Ereignis, und
Empfangen einer ersten Antwort auf die Anfrage nach dem Steuerungszugriff von dem externen Server (202),
wobei die erste Antwort Informationen über den autorisierten Datenstrom und den autorisierten Tunnel beinhaltet.

4. Knoten (201) nach Anspruch 3, wobei die Anweisungen den Knoten zu Folgendem veranlassen:
Empfangen einer ersten Benutzereingabe zum Anfragen nach einer Benutzerauthentifizierung,
Stellen einer Anfrage nach Benutzerauthentifizierung für einen Benutzer des Knotens an den externen Server (202) unter Verwendung der Kommunikationsschaltung (430), wobei die Anfrage nach der Benutzerauthentifizierung Informationen beinhaltet, die der ersten Benutzereingabe entsprechen, und
Empfangen einer zweiten Antwort auf die Anfrage nach der Benutzerauthentifizierung von dem externen Server (202),
wobei die zweite Antwort Informationen über den autorisierten Tunnel oder Informationen über einen aktualisierten Datenstrom beinhaltet.

5. Knoten (201) nach Anspruch 3, wobei die Anweisungen den Knoten zu Folgendem veranlassen:
Erkennen eines Aktualisierungsereignisses eines Steuerungsstroms, der zwischen dem Knoten und dem externen Server (202) erzeugt wird,
Anfragen am externen Server (202) nach dem Aktualisieren des Datenstroms unter Verwendung der Kommunikationsschaltung (430) als Antwort auf das erkannte Aktualisierungsereignis, und
Empfangen einer dritten Antwort auf eine Anfrage nach Benutzerauthentifizierung von dem externen Server (202),
wobei die dritte Antwort Informationen über den autorisierten Tunnel oder Informationen über einen aktualisierten Datenstrom beinhaltet.

6. Knoten (201) nach Anspruch 1, wobei die Anweisungen den Knoten zu Folgendem veranlassen:
Verwerfen eines Datenpakets der Zielanwendung, wenn der autorisierte Tunnel oder der Datenstrom nicht vorhanden ist, oder
Stellen einer Anfrage nach Netzwerkzugriff auf das Zielnetzwerk an den externen Server (202) unter Verwendung der Kommunikationsschaltung (430), Empfangen einer vierten Antwort auf die Anfrage nach Netzwerkzugriff von dem externen Server (202), Bestimmen, ob ein verfügbarer Tunnel und ein verfügbarer Datenstrom vorhanden sind, basierend auf der vierten Antwort, Bearbeiten des Datenpakets der Zielanwendung basierend auf dem Datenstrom, wenn der verfügbare Tunnel und der Datenstrom vorhanden sind, und Übertragen des bearbeiteten Datenpakets durch den verfügbaren Tunnel unter Verwendung der Kommunikationsschaltung (430), wenn der autorisierte Tunnel oder der autorisierte Datenstrom nicht vorhanden ist.

7. Knoten (201) nach Anspruch 6, wobei die Anweisungen den Knoten zu Folgendem veranlassen:
Erzeugen eines Tunnels unter Verwendung der empfangenen Informationen, so dass er mit einem Gateway (203) verbunden ist, das an einer Grenze des Zielnetzwerks positioniert ist, wenn die Informationen zum Erzeugen des verfügbaren Tunnels von dem externen Server (202) empfangen werden, und
Übertragen des Datenpakets durch den erzeugten Tunnel unter Verwendung der Kommunikationsschaltung (430).

8. Knoten (201) nach Anspruch 6, ferner Folgendes umfassend:
eine Anzeige (440),
wobei die Anweisungen den Knoten zu Folgendem veranlassen:
Ausgeben eines von dem Zielnetzwerk bereitgestellten Bildschirms unter Verwendung der Anzeige (440), wenn das Datenpaket übertragen wird.

9. Knoten (201) nach Anspruch 1,
Empfangen einer zweiten Benutzereingabe zum Anfragen nach einer Freigabe eines Netzwerkzugriffs, und
Stellen einer Anfrage nach Freigabe des Netzwerkzugriffs an den externen Server (202) als Antwort auf die zweite Benutzereingabe.

10. System, einen Knoten nach einem der vorhergehenden Ansprüche und einen Server (202) umfassend, wobei der Server (202) Folgendes umfasst:
eine Kommunikationsschaltung (430),
einen Speicher (330), der dafür konfiguriert ist, eine Datenbank zu speichern, und
einen Prozessor (410), der funktionsfähig mit der Kommunikationsschaltung (430) und dem Speicher (330) verbunden ist,
wobei der Prozessor (410) für Folgendes konfiguriert ist:
Empfangen (1320) einer ersten Anfrage nach Steuerungszugriff auf den Server (202) von einem Knoten (201), wobei die erste Anfrage Identifizierungsinformationen von mindestens einem von dem Knoten (201), einer Zugriffssteuerungsanwendung (211), die in dem Knoten (201) gespeichert ist, und einem Netzwerk beinhaltet, zu dem der Knoten (201) gehört,
Bestimmen (615), ob auf den Knoten (201) zugegriffen werden kann, basierend auf den Identifizierungsinformationen, die in der ersten Anfrage und der Datenbank enthalten sind,
Erzeugen eines Steuerungsstroms zwischen dem Knoten (201) und dem Server (202), wenn auf den Knoten (201) zugegriffen werden kann,
Erzeugen (620) eines Datenstroms zwischen dem Knoten (201) und einem Zielnetzwerk, auf das durch den Knoten (201) zugegriffen werden kann, basierend auf der Datenbank,
Übertragen (630) von Identifizierungsinformationen des erzeugten Steuerstroms und Informationen über den erzeugten Datenstrom unter Verwendung der Kommunikationsschaltung (430) an den Knoten (201) und ein Gateway (203), das an einer Grenze des Zielnetzwerks positioniert ist,
wobei der Knoten (201) veranlasst wird, einen Header zur Authentifizierung in ein Datenpaket der Zielanwendung (221) einzufügen, basierend auf einem Verfahren zum Einfügen eines Headers, der von einer Datenstromtabelle angegeben wird, wenn der autorisierte Datenstrom und der autorisierte Tunnel vorhanden sind.

11. System nach Anspruch 10, wobei der Prozessor (410) des Servers (202) für Folgendes konfiguriert ist:
unter Verwendung der Kommunikationsschaltung (430):
Übertragen von Identifizierungsinformationen eines autorisierten Tunnels an den Knoten (201) und das Gateway (203), wenn der autorisierte Tunnel zwischen dem Knoten (201) und dem Gateway (203) vorhanden ist, und
Übertragen von Informationen, die zum Erzeugen eines Tunnels notwendig ist, an den Knoten (201) und das Gateway (203), wenn der autorisierte Tunnel nicht vorhanden ist, und
Übertragen von Informationen, die angeben, dass der Netzwerkzugriff auf das Zielnetzwerk unmöglich ist, an den Knoten (201), wenn kein Tunnel vorhanden ist, der eine in der Datenbank enthaltene Richtlinie erfüllt.

12. System nach Anspruch 11, wobei der Prozessor (430) des Servers (202) für Folgendes konfiguriert ist:
Empfangen einer zweiten Anfrage nach Benutzerauthentifizierung für einen Benutzer des Knotens (201) durch den Steuerungsstrom, wobei die zweite Anfrage Identifizierungsinformationen des Benutzers beinhaltet, die mit der Benutzerauthentifizierung in Verbindung stehen,
Authentifizieren des Benutzers des Knotens (201), basierend auf Informationen, die in der zweiten Anfrage und der Datenbank enthalten sind,
Aktualisieren des Datenstroms und des Tunnels und
Übertragen eines Ergebnisses der Benutzerauthentifizierung und von Informationen über den aktualisierten Datenstrom und den aktualisierten Tunnel an den Knoten (201) unter Verwendung der Kommunikationsschaltung (430).

13. System nach Anspruch 11, wobei der Prozessor (410) des Servers (202) für Folgendes konfiguriert ist:
Empfangen einer dritten Anfrage nach einer Aktualisierung des Steuerungsstroms von dem Knoten (201), wobei die dritte Anfrage die Identifizierungsinformationen des Steuerungsstroms beinhaltet,
Aktualisieren des Steuerungsstroms, basierend auf den Identifizierungsinformationen, die in der dritten Anfrage und der Datenbank enthalten sind,
Aktualisieren von Informationen über den Datenstrom und den Tunnel und
Übertragen der aktualisierten Informationen an den Knoten (201).

14. System nach Anspruch 11, wobei der Prozessor (410) des Servers (202) für Folgendes konfiguriert ist:
Empfangen einer vierten Anfrage nach Netzwerkzugriff durch eine Zielanwendung (221), die in dem Knoten gespeichert ist, an das Zielnetzwerk, wobei die vierte Anfrage Identifizierungsinformationen des Steuerungsstroms, Identifizierungsinformationen der Zielanwendung (221) und Identifizierungsinformationen des Zielnetzwerks beinhaltet, Bestimmen, ob ein Datenstrom und ein autorisierter Tunnel zwischen der Zielanwendung (221) und dem Zielnetzwerk vorhanden sind, basierend auf den Identifizierungsinformationen, die in der vierten Anfrage enthalten sind, und
Übertragen einer Antwort, die angibt, dass ein Zugriff durch die Zielanwendung (221) auf das Zielnetzwerk unmöglich ist, an den Knoten (201), wenn der Datenstrom oder der autorisierte Tunnel nicht vorhanden ist.

15. System nach Anspruch 14, wobei der Prozessor (410) des Servers (202) für Folgendes konfiguriert ist:
Empfangen einer fünften Anfrage zum Freigeben des Netzwerkzugriffs von dem Knoten (201),
Entfernen des Datenstroms als Antwort auf die fünfte Anfrage und
Anfragen am Gateway (203), den Datenstrom zu entfernen, unter Verwendung der Kommunikationsschaltung (430).

## Revendications

1. Nœud (201) comprenant :
un circuit de communication (430) ;
un processeur (410) connecté fonctionnellement au circuit de communication (430) ; et
une mémoire (420) connectée fonctionnellement au processeur (410) et configurée pour mémoriser une application cible (221) et une application de contrôle d'accès (211), dans lequel la mémoire (420) mémorise des instructions qui, lorsqu'elles sont exécutées par le processeur (410), amènent le nœud (201) à :
détecter (1205) un événement d'accès au réseau de l'application cible (221) à un réseau de destination via l'application de contrôle d'accès (211) ;
déterminer (1210) si un flux de données et un tunnel, qui correspondent aux informations d'identification du réseau de destination et de l'application cible (221) et qui sont autorisés depuis un serveur externe (202), sont présents, via l'application de contrôle d'accès (211) ;
insérer (1215) un en-tête d'authentification dans un paquet de données de l'application cible (221) sur la base d'une méthode d'insertion d'un en-tête indiqué par une table de flux de données lorsque le flux de données autorisé et le tunnel autorisé sont présents ; et
transmettre (1220) le paquet de données manipulé à travers le tunnel en utilisant le circuit de communication (430).

2. Nœud (201) selon la revendication 1, comprenant en outre :
un écran (440),
dans lequel les instructions amènent le nœud à :
afficher un écran fourni par le réseau de destination en utilisant l'écran (440) lorsque le flux de données autorisé et le tunnel autorisé sont présents ; et
afficher un écran d'interface d'utilisateur indiquant que l'accès au réseau de destination n'est pas autorisé, en utilisant l'écran (440) lorsque le flux de données et le tunnel ne sont pas présents.

3. Nœud (201) selon la revendication 1, dans lequel les instructions amènent le nœud à :
détecter un événement d'accès du contrôleur au serveur externe (202) via l'application de contrôle d'accès ;
effectuer une demande d'accès du contrôleur au serveur externe (202) en utilisant le circuit de communication (430) en réponse à l'événement détecté ; et
recevoir une première réponse à la demande d'accès du contrôleur provenant du serveur externe (202),
dans lequel la première réponse comprend des informations relatives au flux de données autorisé et au tunnel autorisé.

4. Nœud (201) selon la revendication 3, dans lequel les instructions amènent le nœud à :
recevoir une première saisie d'utilisateur pour demander l'authentification de l'utilisateur ;
effectuer une demande d'authentification pour un utilisateur du nœud auprès du serveur externe (202) en utilisant le circuit de communication (430), dans lequel la demande d'authentification de l'utilisateur comprend des informations correspondant à la première saisie d'utilisateur ; et
recevoir une deuxième réponse à la demande d'authentification de l'utilisateur du serveur externe (202),
dans lequel la deuxième réponse comprenant des informations relatives au tunnel autorisé ou des informations relatives à un flux de données mis à jour.

5. Nœud (201) selon la revendication 3, dans lequel les instructions amènent le nœud à :
détecter un événement de mise à jour d'un flux de contrôle généré entre le nœud et le serveur externe (202) ;
demander au serveur externe (202) de mettre à jour le flux de contrôle en utilisant le circuit de communication (430) en réponse à l'événement de mise à jour détecté ; et
recevoir une troisième réponse à une demande d'authentification d'utilisateur provenant du serveur externe (202),
dans lequel la troisième réponse comprend des informations relatives au tunnel autorisé ou des informations relatives à un flux de données mis à jour.

6. Nœud (201) selon la revendication 1, dans lequel les instructions amènent le nœud à :
abandonner un paquet de données de l'application cible lorsque le tunnel autorisé ou le flux de données n'est pas présent ; ou
adresser une demande d'accès au réseau de destination au serveur externe (202) en utilisant le circuit de communication (430), recevoir une quatrième réponse à la demande d'accès au réseau du serveur externe (202), déterminer si un tunnel et un flux de données disponibles sont présents, sur la base de la quatrième réponse, lorsque le tunnel et le flux de données sont disponibles, manipuler le paquet de données de l'application cible en fonction du flux de données et transmettre le paquet de données manipulé via le tunnel disponible en utilisant le circuit de communication (430), lorsque le tunnel autorisé ou le flux de données n'est pas présent.

7. Nœud (201) selon la revendication 6, dans lequel les instructions amènent le nœud à :
générer un tunnel en utilisant les informations reçues afin de se connecter à une passerelle (203) située à la limite du réseau de destination lors de la réception des informations permettant de générer le tunnel disponible depuis le serveur externe (202) ; et
transmettre le paquet de données via le tunnel généré en utilisant le circuit de communication (430).

8. Nœud (201) selon la revendication 6, comprenant en outre :
un écran (440),
dans lequel les instructions amènent le nœud à :
afficher un écran fourni par le réseau de destination en utilisant l'écran (440) lorsque le paquet de données est transmis ; et
afficher un écran d'interface d'utilisateur indiquant que l'accès au réseau de destination n'est pas autorisé, en utilisant l'écran (440) lorsque le paquet de données est abandonné.

9. Nœud (201) selon la revendication 1,
reçoit une deuxième saisie d'utilisateur demandant la libération d'un accès au réseau ; et
envoie une demande de libération d'accès au réseau au serveur externe (202) en réponse à la deuxième saisie d'utilisateur.

10. Système comprenant un nœud selon une des revendications précédentes et un serveur (202), le serveur (202) comprenant :
un circuit de communication (430) ;
une mémoire (330) configurée pour mémoriser une base de données ; et
un processeur (410) connecté fonctionnellement au circuit de communication (430) et à la mémoire (330),
dans lequel le processeur (410) est configuré pour :
recevoir (1320) une première demande d'accès du contrôleur au serveur (202) depuis un nœud (201), dans lequel la première demande comprend des informations d'identification d'au moins un du nœud (201), d'une application de contrôle d'accès (211) mémorisée dans le nœud (201) ou d'un réseau auquel appartient le nœud (201) ;
déterminer (615) si le nœud (201) est accessible, sur la base des informations d'identification incluses dans la première demande et de la base de données ;
générer un flux de contrôle entre le nœud (201) et le serveur (202) lorsque le nœud (201) est accessible ;
générer (620) un flux de données entre le nœud (201) et un réseau de destination accessible par le nœud (201), en fonction de la base de données ;
transmettre (630) des informations d'identification du flux de contrôle généré et des informations relatives au flux de données généré en utilisant le circuit de communication (430), au nœud (201) et à une passerelle (203) située à la limite du réseau de destination,
dans lequel le nœud (201) est ainsi amené à insérer un en-tête d'authentification dans un paquet de données de l'application cible (221) selon une méthode d'insertion d'un en-tête indiquée par une table de flux de données lorsque le flux de données autorisé et le tunnel autorisé sont présents.

11. Système selon la revendication 10, dans lequel le processeur (410) du serveur (202) est configuré pour :
transmettre, via le circuit de communication (430),
des informations d'identification d'un tunnel autorisé au nœud (201) et à la passerelle (203) lorsque le tunnel autorisé entre le nœud (201) et la passerelle (203) est présent ;
transmettre des informations nécessaires à la génération d'un tunnel au nœud (201) et à la passerelle (203) en l'absence de tunnel autorisé ; et
transmettre au nœud (201) les informations indiquant que l'accès au réseau de destination est impossible en l'absence de tunnel conforme à une politique dans la base de données.

12. Système selon la revendication 11, dans lequel le processeur (430) du serveur (202) est configuré pour :
recevoir une deuxième demande d'authentification d'un utilisateur du nœud (201) via le flux de contrôle, dans lequel la deuxième demande comprend les informations d'identification de l'utilisateur associées à l'authentification d'utilisateur ;
authentifier l'utilisateur du nœud (201) sur la base des informations incluses dans la deuxième demande et la base de données ;
mettre à jour le flux de données et le tunnel ; et
transmettre au nœud (201) un résultat de l'authentification d'utilisateur et les informations relatives au flux de données et au tunnel mis à jour en utilisant le circuit de communication (430).

13. Système selon la revendication 11, dans lequel le processeur (410) du serveur (202) est configuré pour :
recevoir une troisième demande de mise à jour du flux de contrôle depuis le nœud (201), dans lequel la troisième demande comprend les informations d'identification du flux de contrôle ;
mettre à jour le flux de contrôle sur la base des informations d'identification incluses dans la troisième demande et dans la base de données ;
mettre à jour les informations relatives au flux de données et au tunnel ; et
transmettre les informations mises à jour au nœud (201).

14. Système selon la revendication 11, dans lequel le processeur (410) du serveur (202) est configuré pour :
recevoir une quatrième demande d'accès au réseau d'une application cible (221), qui est mémorisée dans le nœud, au réseau de destination, dans lequel la quatrième demande comprend les informations d'identification du flux de contrôle, les informations d'identification de l'application cible (221) et les informations d'identification du réseau de destination ;
déterminer si un flux de données et un tunnel autorisé entre l'application cible (221) et le réseau de destination sont présents, sur la base des informations d'identification incluses dans la quatrième demande ; et
transmettre au nœud (201) une réponse indiquant que l'accès de l'application cible (221) au réseau de destination est impossible en l'absence du flux de données autorisé ou du tunnel autorisé.

15. Système selon la revendication 14, dans lequel le processeur (410) du serveur (202) est configuré pour :
recevoir une cinquième demande de libération de l'accès au réseau depuis le nœud (201) ;
supprimer le flux de données en réponse à la cinquième demande ; et
demander à la passerelle (203) de supprimer le flux de données en utilisant le circuit de communication (430).
